# EUROPÄISCHE PATENTSCHRIFT

(11) **EP 4 325 775 B1**
(45) Veröffentlichungstag und Bekanntmachung des Hinweises auf die Patenterteilung: **01.07.2026**
(21) Anmeldenummer: 23184428.3
(22) Anmeldetag: 10.07.2023
(51) Int. Cl.: H04L 12/403

(54) **MODULBUS-SYSTEM UND VERFAHREN ZUR AUTOMATION EINER BEHANDLUNGSANLAGE**
MODULAR BUS SYSTEM AND METHOD FOR AUTOMATION OF A TREATMENT SYSTEM
SYSTÈME DE BUS MODULAIRE ET PROCÉDÉ D'AUTOMATISATION D'UNE INSTALLATION DE TRAITEMENT

(30) Priorität: 16.08.2022 DE 102022120563
(43) Veröffentlichungstag der Anmeldung: 21.02.2024
(73) Patentinhaber: Turck Holding GmbH, 58553 Halver (DE)
(72) Erfinder: Janczak, Harald, 32805 Horn-Bad Meinberg (DE)
(74) Vertreter: DTS Patent- und Rechtsanwälte PartmbB

(56) Entgegenhaltungen:
- EP-A1- 3 648 416
- US-A1- 2009 225 766
- US-A1- 2019 041 830

## Beschreibung

Die vorliegende Erfindung betrifft ein MODULBUS-System zur Anbindung an ein Netzwerk und ein Verfahren zum Betrieb eines solchen MODULBUS-Systems.

Im Stand der Technik sind in Reihe geschaltete MODULBUS-Systeme bekannt, beispielsweise offenbart die EP 1 509 005 A1 ein MODULBUS-System zur Übertragung von Daten, an welches mehrere Teilnehmer angeschlossen sind. Hierbei wird innerhalb des Punkt-zu-Punkt-Übertragungsprotokolls ein Broadcast-Telegramm definiert, innerhalb welchem ausgewählte Daten in einem Broadcast-Übertragungsmodus übertragen werden können.

Die US 2019/ 0041830 A1 beschreibt Systeme und Verfahren zum Implementieren eines softwaredefinierten industriellen Systems.

Weiterhin offenbart die WO 2018/215299 A1 ein Verfahren zur Verarbeitung von Prozessdaten durch eine Mehrzahl von in Reihe geschalteten Datenbusteilnehmern eines Lokalbusses, der beispielsweise als Ring-Bus ausgeführt sein kann. Hierbei kann jeder Ausgang eines Datenbusteilnehmers mit einem Feldgerät verbunden sein.

Hierbei ist die Wartung und Fehleranalyse des MODULBUS-Systems aufwändig, insbesondere bei komplexeren MODULBUS-Systemen.

Es ist die Aufgabe der vorliegenden Erfindung ein verbessertes MODULBUS-System und ein entsprechendes Verfahren zur Datenübertragung vorzuschlagen, welche hierzu eine Verbesserung darstellen.

Diese Aufgabe wird erfindungsgemäß gelöst durch ein MODULBUS-System nach den Merkmalen des Anspruchs 1 und einem Verfahren nach den Merkmalen des Anspruches 8. Vorteilhafte Ausgestaltungen sind in den jeweiligen, zugehörigen Unteransprüchen angegeben.

Danach wird die Aufgabe gelöst durch ein Analysemodul für ein MODULBUS-System, wobei das MODULBUS-System eine Daisy-Chain-Systematik aufweist, und wobei das Analysemodul und mindestens ein Slavemodul in einer Daisy-Chain in Reihe geschaltet sind, wobei zur Kommunikation in UP-Richtung das Analysemodul mindestens drei IN-Anschlüsse und/oder drei OUT-Anschlüsse aufweist, und wobei das Analysemodul ausgebildet ist, in DN-Richtung über einen OUT-Anschluss Moduldaten zu senden, umfassend mindestens einen Microcontroller und mindestens ein Speicherelement.

Hierbei ist das Analysemodul ausgebildet, um
- in UP-Richtung die von einem Gateway an mindestens ein anderes Slavemodul (100) gesendete Daten zu speichern und/oder
- in DN-Richtung über einen IN-Anschluss Moduldaten von mindestens einem Slavemodul (100) zu empfangen und diese Moduldaten mindestens teilweise zu speichern, insbesondere bedarfsweise zu speichern.

Hierbei meint "speichern", dass diese Daten für eine definierte Zeitdauer in einem Speicherelement abgelegt werden und von dort auch wieder ausgelesen und/oder entnommen werden können. "Speichern" meint insbesondere, dass (Teil-)Daten der getakteten Datenübermittlung, insbesondere Protokollübermittlung, unabhängig gespeichert werden können, insbesondere die (Teil-)Dateninhalte von mehreren Takten der Datenübermittlungen, insbesondere der Protokollübermittlungen. Das getaktete Durchleiten von Daten eines anderen Slavemoduls während eines Taktes und auch das taktbezogene Verzögern von Daten oder Datenpaketen, insbesondere Protokollen oder Protokollinhalten, für ein anderes Slavemodul innerhalb eines Taktes, soll vorliegend nicht als "speichern" im Sinne dieser Erfindung verstanden werden.

Weiterhin meint "bedarfsweise" zu speichern, dass Moduldaten und Moduldatensätze eines Slavemoduls empfangen, analysiert und diese Moduldaten beispielsweise unmittelbar als nicht speicherungsbedürftig ganz oder teilweise gelöscht werden.

Unter "Moduldaten" oder "Moduldatensatz" sollen die Teildaten oder (Teil-)Dateninhalte eines MODULBUS-Busprotokolls verstanden werden, die
- vom Gateway in UP-Richtung für und an ein einzelnes Slavemodul und/oder
- von einem einzelnen Slavemodul in DN-Richtung an das Gateway
gesendet werden. Vorliegend sollen "Moduldaten" und "Moduldatensatz" synonym verstanden werden, wenn nicht etwas Unterschiedliches ausgeführt wird.

Das Analysemodul umfasst idealerweise einen DN-Stream-Listener, der ausgebildet sein kann, um mindestens einen Teil der in DN-Richtung über den IN-Anschluss erfassten Daten zu empfangen und zu konvertierten, wie beispielsweise zu filtern und/oder zu verändern, sowie diese zu speichern. Weiterhin können diese erfassten und/oder konvertierten Daten in DN-Richtung an das Gateway gesendet werden.

Das Analysemodul ist hierbei beispielsweise ein übliches XION Slavemodul mit den genannten zusätzlichen Elementen.

Bei einer Ausführungsform kann eine Verbesserung darin bestehen, dass das Analysemodul ausgebildet ist, um
- in UP-Richtung die von dem Gateway an alle nachlaufenden, verbundenen Slavemodule gesendete Daten zu speichern und/oder
- in DN-Richtung über einen IN-Anschluss Moduldaten von allen Slavemodulen zu empfangen und diese Moduldaten zu speichern.

In einem MODULBUS-System werden in einer Daisy-Chain-Systematik in UP-Richtung von den einzelnen Slavemodulen in der durchlaufenden UP-Richtung die Dateninhalte als Anfrage (Befehl) aus dem Protokoll entnommen, die für das jeweilige (eigene) Slavemodul als Moduldaten bestimmt sind, wobei das restliche und um diese entnommenen Moduldaten bzw. um den jeweiligen Moduldatensatz verkleinerte Protokoll, in UP-Richtung weitergeleitet wird. Üblicherweise wird hierbei ein Moduldatensatz mehr von Gateway in UP-Richtung gesendet, als Slavemodule im MODULBUS-System vorhanden sind, um ein ggf. hinzugekommenes Slavemodul zu identifizieren.

Parallel sendet das jeweilige Slavemodul einen Umfang an (eignen) Moduldate (Moduldatensatz) als Antwort über den OUT-Anschluss in DN-Richtung an das Gateway. Hierbei ist das MODULBUS-System in DN-Richtung als Datenbus oder Busverbindung in einer Linienstruktur ausgebildet. Jeder Moduldatensatz in UP-Richtung löst einen Moduldatensatz in DN-Richtung zum Gateway aus. Die DN-Leitung ist physikalisch insbesondere genau eine einzige Ader und/oder Leiterbahn.

Somit kann das Analysemodul, in Abhängigkeit von seiner Position in der Kette von Slavemodulen, unmittelbar aus den Daten in UP-Richtung nur die Slavemodule erkennen und deren Moduldaten oder -sätze auslesen, die nachlaufend angeordnet sind. Weiterhin kann das Analysemodul unabhängig von seiner Position in der Kette der Slavemodule alle Moduldaten oder Moduldatensätze erfassen, die in DN-Richtung von einem der vorlaufenden oder nachlaufenden Slavemodule des MODULBUS-Systems gesendet werden.

Üblicherweise ist die Busverbindung in der Linienstruktur ständig offen, so dass alle Moduldaten auf der DN-Leitung vom Analysemodul empfangen werden können. Zur Optimierung der Datenanalyse, -konvertierung und -speicherung kann es vorteilhaft sein, wenn das Analysemodul hinsichtlich der zu empfangenden Moduldaten in DN-Richtung und/oder DN-Stream-Listener schaltbar ist. Auf diese Weise können definiert, insbesondere getaktet, Moduldaten mindestens eines Slavemoduls in DN-Richtung nicht empfangen werden. Auf diese Weise steht dem Mikroprozessor des Analysemoduls mehr Prozessorzeit für die erwarteten, relevanten Moduldaten anderer Slavemodule zur Verfügung.

Hierbei meint "vorlaufend" und "nachlaufend" die UP- oder DN-Richtung aus der Sicht des jeweiligen Moduls, insbesondere des Analysemoduls. Ein Analysemodul, das an Position 2 eines MODULBUS-Systems aus einer Kette von einem Gateway und 4 Slavemodulen steht, wobei das Analysemodul als eines der vier Slavemodule zählt, hat
- in UP-Richtung ein "vorlaufendes" und zwei "nachlaufende" Slavemodule und
- in DN-Richtung in analoger Weise zwei vorlaufende Slavemodule und ein nachlaufendes Slavemodul.

Es kann somit eine vorteilhafte Ausgestaltung darin bestehen, wenn das Analysemodul ausgebildet ist, um aus dem Vergleich von Moduldaten in UP- Richtung und in DN-Richtung mindestens einen Anteil der Topologie der verbundenen Slavemodule und/oder eines MODULBUS-Systems erfasst. Eine solche Erfassung der Topologie kann vollständig bei einem Initialisierungsschritt des Gateways erfolgen.

Somit besteht eine besonders vorteilhafte Ausführungsform darin, wenn das Analysemodul als Kopfmodul ausgebildet ist, also nachlaufend zum Gateway unmittelbar angrenzend angeordnet ist. In diesem Fall weist das Analysemodul idealerweise nur einen IN-Anschluss auf und mindestens drei OUT-Anschlüsse. Hierbei meint "nur einen IN-Anschluss" insbesondere, dass nur ein IN-Anschluss physikalisch verbunden ist, wobei weitere, unverbundene IN-Anschlüsse vorgesehen sein können.

In dieser Kopfposition als Kopfmodul kann das Analysemodul alle Moduldaten in UP- und in DN-Richtung sehr einfach erfassen und bedarfsweise auswerten, insbesondere auch daraufhin auswerten, ob ein vom Gateway erlassener Befehl an ein Slavemodul, hinsichtlich Zeitversatz und Dateninhalt dieses Slavemoduls, die erwartete Antwort in DN-Richtung erfährt.

Bei einer weiteren Ausführungsform kann das Analysemodul als Endmodul ausgebildet sein. Hierbei ist dieses in UP-Richtung am Ende der Kette aus mehreren Slavemodulen angeordnet und weist außer dem OUT-Anschluss in DN-Richtung, mindestens drei IN-Anschlüsse und keinen OUT-Anschluss in UP-Richtung auf, beziehungsweise ist von den vorhandenen OUT-Anschlüssen keiner verbunden.

Mit dieser Ausführungsform kann identifiziert werden, ob in UP-Richtung vorlaufend eine Leerstelle gegeben ist, also ein Slavemodul abwesend ist, da in diesem Fall der IN-Anschluss in UP-Richtung verändert wird.

Vorteil dieser Ausführungsform besteht darin, dass ein bestehendes MODULBUS-System nur mit einem am Ende angehängten, ergänzten Analysemodul erweitert werden muss. Die Topografie muss nicht durch das Einsetzen an anderer Stelle und Veränderung der bestehenden Konfiguration verändert oder verschoben werden.

Durch die drei IN-Anschlüsse können bis zu zwei "Leerstellen" in der Kette des MODULBUS-Systems erkannt werden.

Bei einer weiteren Ausführungsform kann das Analysemodul als Mittelmodul ausgebildet sein und in UP-Richtung mindestens drei IN-Anschlüsse und mindestens drei OUT-Anschlüsse aufweisen. Mit dieser Ausführungsform ist es möglich, in UP-Richtung die nachfolgenden Moduldaten zu erfassen und in der gesamten DN-Richtung alle Moduldaten zu erfassen. Weiterhin kann eine vorlaufende Leerstelle in UP-Richtung erkannt werden. Weiterhin können in UP-Richtung bis zu zwei Leerstellen erkannt werden, die direkt am Analysemodul angrenzen. Ein fehlerhaftes Slavemodul kann daran erkannt werden, wenn in UP-Richtung eine abweichende Menge an Moduldaten empfangen wird als erwartet. Hieraus kann geschlossen werden, dass ein fehlerhaftes Slavemodul vorlaufend zum Analysemodul angeordnet ist, wobei die Position unbekannt bleibt.

Eine Leerstelle oder ein fehlerhaftes Slavemodul kann identifiziert werden, indem das Analysemodul ausgebildet ist, wie vorstehend ausgeführt. Basierend auf den Moduldaten in UP-Richtung und aus dem Fehlen, Fehlern und/oder dem Umfang von Moduldaten in DN-Richtung können entsprechende Analysen im Analysemodul und/oder einer vom Analysemodul mit Analysedaten versorgten zentralen Prozessor- und/oder Auswerteeinheit vorgenommen werden.

Das Fehlen eines benachbarten Slavemoduls wird insbesondere dadurch erkannt, dass nachfolgend zum fehlenden Slavemodul die Datenweiterleitung in UP-Richtung vom empfangenden Slavemodul oder dem Adaptermodul auf einer anderen Ader des OUT-Anschlusses erfolgt, insbesondere der "nächsten" Ader, indem diese eine definierte Ab- oder Reihenfolgen aufweisen. Somit wird das Fehlen von Modulen als Information und als Anweisung an nachfolgende Module weitergeleitet.

Hierbei meint "Analysedaten" jegliche Daten oder Datenumfang, der von einem Analysemodul über den Normalbetrieb des MODULBUS-Systems hinaus durch und/oder aus Moduldaten von mindestens einem Slavemodul gespeichert, konvertiert oder auf eine sonstige Weise datentechnisch bearbeitet wurden.

Bei einer weiteren Ausführungsform kann ein Vorteil darin bestehen, dass das Analysemodul zwei Microcontroller umfasst, wobei ein erster Microcontroller ausgebildet und/oder funktional vorgesehen ist, einen ersten Datenumfang und/oder Datenteil zu bearbeiten, und ein zweiter Microcontroller ausgebildet und/oder funktional vorgesehen ist, einen zweiten Datenumfang und/oder Datenteil zu bearbeiten.

Der erste Datenumfang und/oder Datenteil kann insbesondere die eigenen Moduldaten des Analysemoduls betreffen und/oder den Datenumfang, der standardmäßig in einem MODULBUS-System kommuniziert wird. Der zweite Datenumfang und/oder Datenteil kann insbesondere alle sonstigen Daten betreffen, beispielsweise die alleinige oder gemeinsame Bearbeitung von Moduldaten anderer Slavemodule, die über eine Steckverbindung kommunizierten Daten, und die Organisation der mindestens zeitweisen Speicherung.

Bei einer weiteren Ausführungsform kann ein Vorteil darin bestehen, dass das Analysemodul ausgebildet ist, die eigenen Moduldaten und mindestens Moduldaten eines anderen Slavemoduls zu konvertieren, insbesondere zeit- und/oder eventabhängig zu konvertieren und/oder zu strukturieren.

Hierbei besteht die Strukturierung insbesondere in einer zeitlichen Sortierung, um nachfolgende Analysen zu ermöglichen. Die Konvertierung und/oder Filterung besteht insbesondere darin, dass eine Indizierung erfolgt und insbesondere Normalfunktionen von Sondersituationen unterschieden werden, um die Datenmenge zu verringern und die Datenanalyse zu erleichtern. So kann beispielsweise ein Gateway-Befehl, auf den die erwartete Antwort des Slavemoduls nach der erwarteten Zeit erfolgt, ggf. nach einer gewissen Pufferzeit, nur als eine Aktion einer Kategorie gezählt werden, wobei bei Befehlen oder Events, die in irgendeiner Weise außerhalb des Standards erfolgen, eine umfangreichere Protokollierung erfolgt.

Das Analysemodul kann optional einen Anschluss und/oder einen Steckverbinder umfassen, der als DxP und/oder RS232 Port ausgebildet ist. Insbesondere kann neben einem umfangreichen Speicherelement, das beispielsweise als Flash Memory oder entnehmbares Speichermedium, wie eine SD-Card, ausgebildet sein kann, ein interner SysTick als Timer oder Zählwerk vorgesehen sein, der bei 0 beginnt und beispielsweise in 10ms oder 100ms Schritten zählt. Damit repräsentiert der SysTick die Lebenszeit des Systems und kann vollständig geloggt werden.

Als SysTick Maximum kann bei 32bit der Wert 4294967295 dienen, der einer Systemdauer von 1,3 Jahren bei einer Schrittdauer von 10ms entspricht und bei einer Schrittdauer von 100ms einer Systemdauer von über 13 Jahren entspricht.

Von der Erfindung ist weiterhin ein MODULBUS-System mit mind. zwei Slavemodulen umfasst, wobei zur Kommunikation in UP-Richtung jedes Slavemodul mindestens drei parallele IN-Anschlüsse und/oder drei parallele OUT-Anschlüsse aufweist, und wobei jedes Slavemodul ausgebildet ist, in DN-Richtung über einen OUT-Anschluss Moduldaten zu senden. Hierbei ist mindestens eines der Slavemodule ein Analysemodul, das nach einem der hierin ausgeführten Varianten und Ausführungsformen ausgebildet ist.

Bei einer vorteilhaften Ausführungsform umfasst das MODULBUS-System mindestens ein Analysemodul als Kopfmodul, Mittelmodul und/oder Endmodul, idealerweise ist das Analysemodul ein Kopfmodul.

Von der Erfindung ist weiterhin ein Verfahren zum Betrieb und Überwachung eines MODULBUS-Systems mit mindestens einem Gateway und zwei Slavemodulen über mindestens drei parallele Anschlüsse in UP-Richtung und mindestens einen Anschluss in DN-Richtung umfasst. Hierbei sind folgende Schritte umfasst:
- UP-Datenversand zwischen zwei Slavemodulen über jeweils einen der parallelen IN- und OUT-Anschlüsse in UP-Richtung,
- DN-Datenversand von mindestens einem Slavemodul in DN-Richtung über den einen OUT-Anschluss an das Gateway, insbesondere von allen Slavemodulen in DN-Richtung über den OUT-Anschluss an das Gateway.

Bei dem Verfahren wird mindestens eines der Slavemodule vorgesehen und verwendet, das ein Analysemodul ist, welches nach einem der hierin ausgeführten Varianten und Ausführungsformen ausgebildet ist.

Bei einem verbesserten Verfahren kann vorgesehen werden, dass
- in einem Initialschritt durch die vom Gateway an mindestens ein Slavemodul gesendeten Daten dieses identifiziert wird, insbesondere alle Slavemodule identifiziert werden, wobei der Initialisierungsschritt als Sonderfall nur bedarfsweise erfolgt und insbesondere vom oder über das Gateway veranlasst wird;
- in einem ersten Analyseschritt in UP-Richtung die vom Gateway an mindestens ein anderes Slavemodule gesendeten Daten, insbesondere Moduldaten, mindestens teilweise in dem Analysemodul kopiert und/oder gespeichert werden, wobei der erste Analyseschritt im bestimmungsgemäßen Betrieb regelmäßig, insbesondere bei jeder Übermittlung von Daten vorgenommen wird;
- in einem zweiten Analyseschritt in DN-Richtung Moduldaten von mindestens einem Slavemodul erfasst und kopiert und/oder speichern werden, wobei der zweite Analyseschritt im bestimmungsgemäßen Betrieb regelmäßig, insbesondere bei jeder Übermittlung von Daten vorgenommen wird;
   und/oder
- in einem Berichtsschritt gespeicherte Daten mindestens teilweise an das Gateway gesendet werden, wobei der Berichtsschritt als Sonderfall nur bedarfsweise erfolgt und insbesondere vom oder über das Gateway veranlasst wird.

Wie bereits vorstehend ausgeführt, kann ein Vorteil darin bestehen, wenn die zu speichernden (Modul-)Daten unmittelbar auch konvertiert, verdichtet und/oder selektiert, d.h. gefiltert, werden. Alternativ oder zusätzlich kann es vorteilhaft sein, wenn die aus UP-Richtung und/oder aus DN-Richtung erfassten (Modul-)Daten in einem ersten Speicherschritt vollständig oder weitgehend vollständig gespeichert werden, nachfolgend in einem Analyseschritt ausgewertet und konvertiert und/oder gefiltert werden und in einem zweiten Speicherschritt längerfristig, insbesondere bis zu einem Berichtsschritt, gespeichert werden.

Insgesamt sollen die für das Analysemodul bzw. das MODULBUS-System genannten Vorteile und Aspekte identisch oder in analoger Weise auch für das Verfahren gelten und umgekehrt.

Weitere Einzelheiten und Vorteile der Erfindung sollen nun anhand von in den Zeichnungen dargestellten Ausführungsbeispielen näher erläutert werden.

Es zeigen:
- Fig. 1: eine schematische Darstellung des MODULBUS-Systems in einer ersten Ausführungsform,
- Fig. 2: eine schematische Darstellung des MODULBUS-Systems in einer zweiten Ausführungsform,
- Fig. 3: eine schematische Darstellung des MODULBUS-Systems in einer dritten Ausführungsform und
- Fig. 4: eine schematische Darstellung des Analysemoduls in einer Ausführungsform.

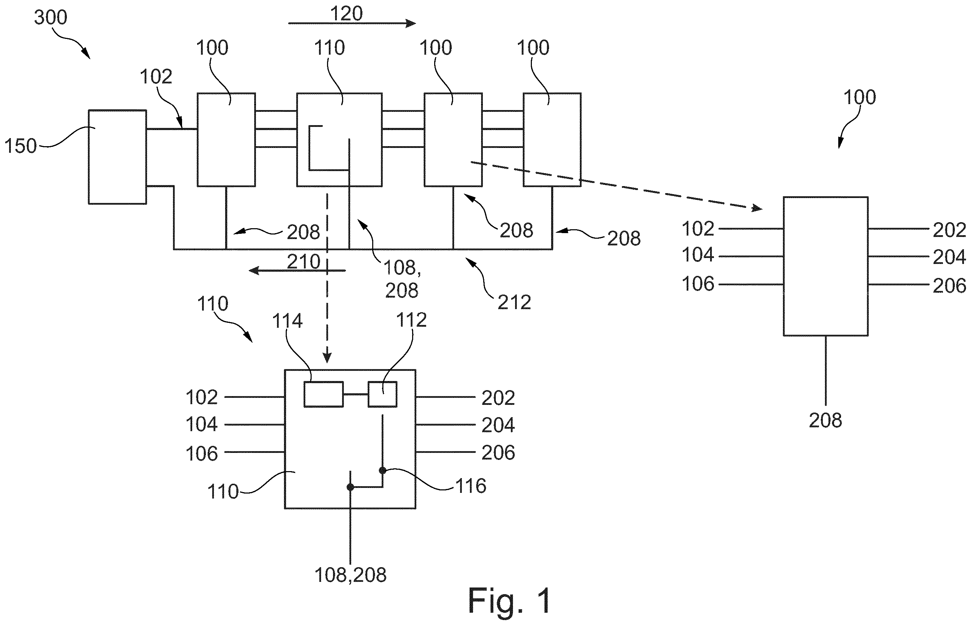

Fig. 1 zeigt den schematischen Aufbau eines MODULBUS-Systems 300 mit einem Gateway-Modul 150, kurz Gateway 150 genannt, drei Slavemodulen 100 und einem Analysemodul 110. Das Gateway 150 weist in dem vorliegenden Beispiel nur einen einzigen UP-Ausgang auf.

Zur Kommunikation in UP-Richtung 120 weist das erste Slavemodul 100, das auf Position 1 benachbart zum Gateway 150 angeordnet ist, ebenfalls drei IN-Anschlüsse auf, wobei nur ein einzelner IN-Anschluss 102 verbunden ist und genutzt wird. Die nicht genutzten IN-Anschlüsse sind nicht verbunden und nicht dargestellt.

Die beiden weiteren Slavemodule 100 sowie das Analysemodul 110 weisen jeweils drei parallele IN-Anschlüsse auf. Vorliegend werden zur Beschreibung die Positionen 1 bis 4 genannt, wobei die Position 1 unmittelbar benachbart zum Gateway 150 angeordnet ist und die Position 4 die Endposition bildet, vom Gateway 150 aus betrachtet. Die beiden Slavemodule 100 in der ersten und dritten Position weisen jeweils drei parallele OUT-Anschlüsse 202, 204, 206 auf, ebenso das auf Position 2 befindliche Analysemodul 110, welches eine Mittelmodul ist.

In DN-Richtung 210 sind die vier Module über jeweils einen OUT-Anschluss 208 mit einer DN-Leitung 212 verbunden, wobei die Verbindung des Analysemodule 110 ein IN-Anschluss 108 und eine OUT-Anschluss 208 zur DN-Leitung 212 ist.

Das Slavemodul 100 auf der Position vier, der Endposition, weist in UP-Richtung keine OUT-Anschlüsse auf, wobei diese baulich vorhanden, aber nicht belegt sind, das heißt nicht mit einem weiteren Slavemodul 100 oder Analysemodul 110.

Das Slavemodul 100 der Position 3 ist als Detaildarstellung rechts dargestellt und das Analysemodul 110 ist als Detaildarstellung im unteren Bildbereich dargestellt.

Wie schematisch in der unteren Detaildarstellung gezeigt, umfasst das Analysemodul 110 einen Microcontroller 112 und ein Speicherelement 114. Der Microcontroller 112 ist in nicht näher dargestellter Weise mit den IN-Anschlüssen 102, 104, 106 verbunden, so dass die dort eingehenden (Modul-)Daten erfasst und ausgewertet werden können. Weiterhin ist der Microcontroller 112 über eine Listenleitung 116 mit dem IN-Anschluss 108 in DN-Richtung 210 bzw. der DN-Leitung 212 verbunden, wobei IN-Anschluss 108 und Listenleitung 116 identisch bzw. eine einzige Leitung sein können.

Ein Anwendungsfall für die gezeigte Anordnung kann beispielsweise sein, dass das Slavemodul 100 auf Position 4 einen Temperatursensor aufweist und das Slavemodul 100 auf Position 3 ein einfaches Zählwerk, das beispielsweise die Umdrehung pro Minute in DN-Richtung 210 über die DN-Leitung 212 an das Gateway 150 meldet. Erfasst nun das Analysemodul 110 eine Temperatur über einen Grenzwert von beispielsweise 80°C, wird das Event und die Dauer des Events als "kritischer Zustand" oder "hochbelasteter Zustand" gespeichert. Auf diese Weise kann bspw. die Lebensdauer des betroffenen Motors abgeschätzt und Wartungsintervalle geplant werden.

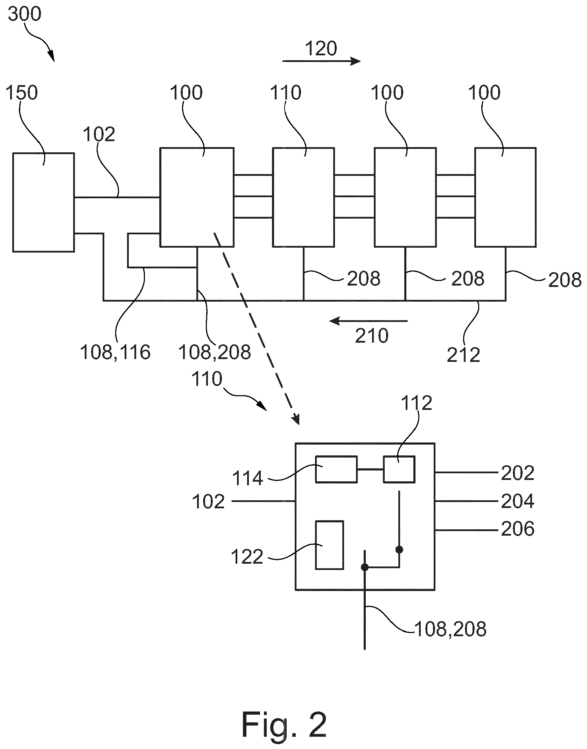

Bei der Ausführungsform nach Figur 2 ist das Analysemodul 110 in der Position 1, es ist also als Kopfmodul ausgebildet, hieran schließen sich in UP-Richtung drei Slavemodule 100 an. Weiterhin umfasst das Analysemodul 110 einen Steckverbinder 122, der als DxP als ein digitaler Ein- und Ausgang oder als RS232 zur seriellen Kommunikation ausgebildet ist. Die sonstigen Merkmale sind identisch oder analog zur Figur 1.

Ein Anwendungsfall für diese gezeigte Anordnung kann beispielsweise sein, dass das Analysemodul 110 für den IN-Anschluss 108 alle Moduldaten der Slavemodule 100 in DN-Richtung 210 empfängt. Durch die Implementierung einer Argee-Funktion, wird der Datenumfang im Austausch mit der PLC und damit auch die zentrale Prozessorleistung verringert werden. Das Analysemodul 110 kontrolliert den Anschluss für den Steckverbinder 122 und sendet entsprechende Moduldaten an das Gateway 150. Dies erfolgt insbesondere vergleichbar den XION Slavemodulen 100 durch entsprechende Prozess Daten im UP-Richtung 120 und Daten in DN-Richtung 210. Die Argee-Funktion kann dahingehend erweitert werden, dass spezielle C-programmierte Funktionen, insbesondere in einem der üblichen Standards (C89/C90, C99, C11), als ein oder mehrere Softwarebausteine aufrufbar sind, um Daten zu bearbeiten und/oder zu analysieren. Diese Softwarebausteine zeichnen sich dadurch aus, dass sie prozessornah und geschwindigkeitsoptimiert aufrufbar sind.

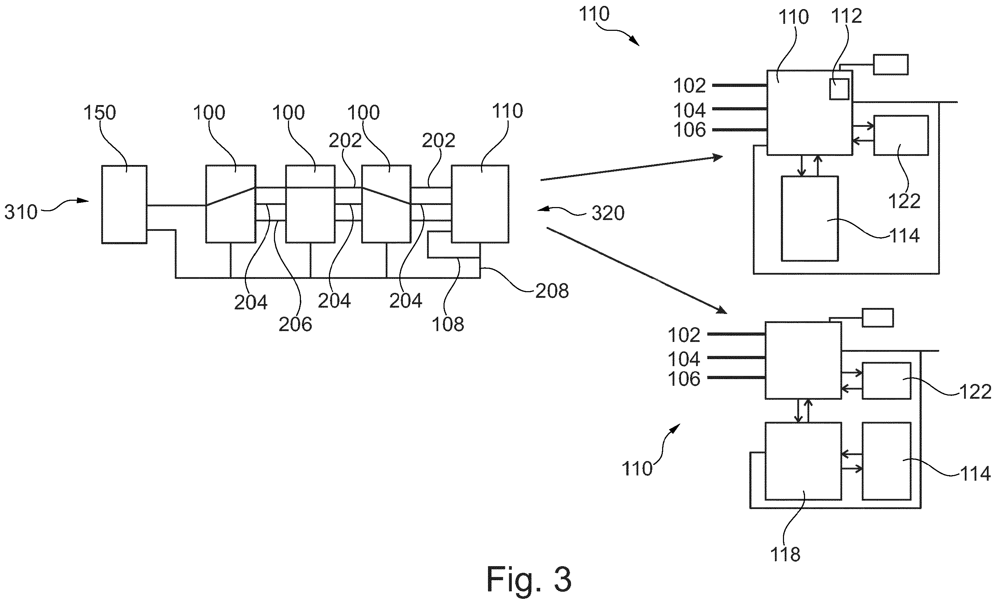

Bei dem Ausführungsbeispiel gemäß der Figur 3 ist das Analysemodul 110 als Endmodul auf der Position 4 angeordnet, also am Ende der Daisy-Chain-Gruppe. Die Erfassung der Daten ist somit eingeschränkt, weil in UP-Richtung die Daten bzw. die Protokollinhalte bereits um die Moduldaten für die Slavemodule in den vorlaufenden Positionen verkürzt wurden. Das Endmodul kann allerdings erfassen, ob im Daisy-Chain ein Slavemodul 100 fehlt, wie in dem gezeigten Beispiel skizziert.

In diesem Fall wechselt der OUT-Anschluss 202 des unverbundenen, leeren Slavemoduls 100 auf den nächsten OUT-Anschluss 204, was von dem endständigen Analysemodul 110 erfasst und gespeichert werden kann.

Das MODULBUS-System 300 mit den gezeigten drei Slavemodulen 100 und dem einen Analysemodul 110, ist in UP-Richtung ein Daisy-Chain-System und in DN-Richtung ein Datenbus in einer Linienstruktur, wie eingangsausgeführt.

In den beiden rechten Teildarstellungen sind zwei Ausführungsformen der Analysemodule 110 gezeigt, die beide einen Steckverbinder 122 aufweisen, der beispielsweise ein DxP und/oder RS232 sein kann und von dem Analysemodul 110 in der zur Figur 2 beschriebenen Weise organisiert werden kann.

Das Analysemodul 110 unterscheidet sich gemäß dem unteren Teilbild von dem oberen Teilbild dadurch, dass ein erster Microcontroller 112 vorgesehen ist, der einen ersten Datenumfang organisiert, wie sie beispielsweise im normalen Betrieb des MODULBUS-Systems 300 übertragen werden. Der zweite Microcontroller 118 ist vorgesehen, um einen zweiten Datenumfang zu organisieren, wie beispielsweise die über den Steckverbinder 122 zu organisierenden Daten.

Ist ein solches Analysemodul 110 als Kopfmodul oder als Mittelmodul angeordnet, kann der zweite Microcontroller 118 beispielsweise die Konvertierung, die Filterung, die Selektion und/oder das Reporting an das Gateway 150 organisieren. Insbesondere kann der erste Microcontroller 112 und/oder der zweite Microcontroller 118 ausgebildet sein und/oder eine entsprechende Software umfassen, die von dem Microcontroller verwendet wird, um ein Maschinenlernen (ML) durchzuführen und/oder die auf Basis einer künstlichen Intelligenz (KI) arbeitet.

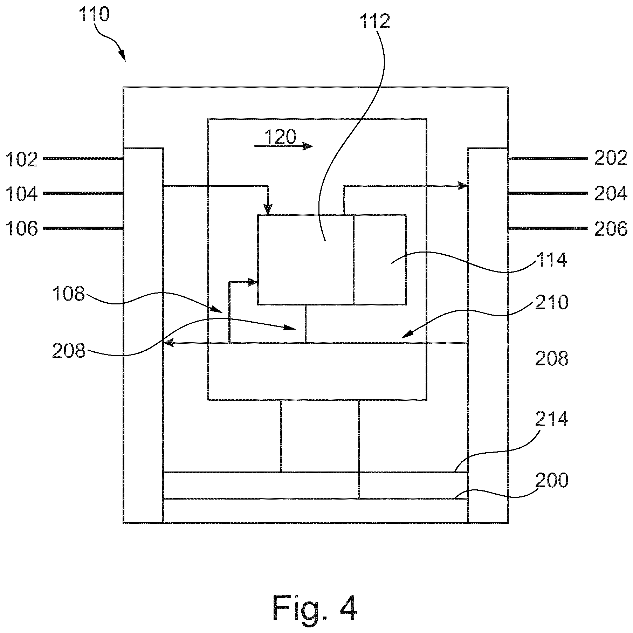

Schließlich ist in der Figur 4 ein Analysemodul 110 dargestellt, das analog zu den vorsehenden Analysemodulen 110 der Figuren 1 bis 3 ausgebildet ist. Es unterschiedet sich allerdings dadurch, dass eine Versorgungsleitung 200 und eine Leitung 214 vorgesehen ist, wobei die Leitung 214 den Nullleiter (GRD) darstellt. Die Versorgungsleitung kann eine Spannung von beispielsweise 24V den Verbrauchern des Analysemoduls 110 zur Verfügung stellen. Das MODULBUS-System 300 wird vom Gateway 150 mit einer Spannung von 5V versorgt. Es kann eine weitere, nicht dargestellte galvanisch getrennte Spannungsversorgung von 24V vorgesehen sein, über die dem Analysemodul 110 ebenfalls für die DxP und/oder RS232 eine Spannung von 24V zur Verfügung gestellt wird.

Es versteht sich für den Fachmann, dass die vorstehenden Beispiele hinsichtlich ihrer Merkmale und Komponenten kombinierbar und nicht einschränkend gemeint sind. Insbesondere kann das Analysemodul 110 in unterschiedlichen Mittelpositionen angeordnet sein oder mehr als ein Analysemodul 110 vorgesehen werden. Weiterhin können weniger oder mehr als drei Slavemodule 100 vorgesehen werden, wenn diese erforderlich ist und auch mehr zwei oder mehr als drei IN-Anschlüsse und Out-Anschlüsse in UP-Richtung vorgesehen werden.

### Bezugszeichenliste

- 100: Slavemodul
- 102: IN-Anschluss, UP-Richtung
- 104: IN-Anschluss, UP-Richtung
- 106: IN-Anschluss, UP-Richtung
- 108: OUT-Anschluss, DN-Richtung
- 110: Analysemodul
- 112: Microcontroller
- 114: Speicherelement
- 116: Listenleitung
- 118: Microkontroller
- 120: UP-Richtung
- 122: Steckverbinder (DxP RS232)
- 124: ...

- 150: Gateway-Modul

- 200: Versorgungsleitung
- 202: OUT-Anschluss, UP-Richtung
- 204: OUT-Anschluss, UP-Richtung
- 206: OUT-Anschluss, UP-Richtung
- 208: IN-Anschluss, DN-Richtung
- 210: DN-Richtung
- 212: DN-Leitung
- 214: Leitung (GRD)

- 300: MODULBUS-System

## Patentansprüche

1. Analysemodul (110) für ein MODULBUS-System (300), wobei das MODULBUS-System eine Daisy-Chain-Systematik aufweist, wobei das Analysemodul (110) und mindestens ein Slavemodul (100) in einer Daisy-Chain in Reihe geschaltet sind, wobei zur Kommunikation in UP-Richtung (120) das Analysemodul (110) mindestens drei IN-Anschlüsse (102, 104, 106) und/oder drei OUT-Anschlüsse (202, 204, 206) aufweist, und wobei das Analysemodul (110) ausgebildet ist, in DN-Richtung (210) über einen OUT-Anschluss (208), Moduldaten zu senden, umfassend mindestens einen Microcontroller (112) und mindestens ein Speicherelement (114), wobei das Analysemodul (110) ausgebildet ist,
- in UP-Richtung die von einem Gateway (150) an mindestens ein anderes Slavemodul (100) gesendeten Daten zu speichern und/oder
- in DN-Richtung (210) über einen IN-Anschluss (108) Moduldaten von mindestens einem Slavemodul (100) zu empfangen und diese Moduldaten mindestens teilweise zu speichern.

2. Analysemodul (110) nach Anspruch 1, **dadurch gekennzeichnet, dass** dieses ausgebildet ist,
- in UP-Richtung die von dem Gateway (150) an alle nachfolgenden, verbundenen Slavemodule (100) gesendeten Daten zu speichern und/oder
- in DN-Richtung (210) über einen IN-Anschluss (108) Moduldaten von allen Slavemodulen (100) zu empfangen und diese Moduldaten zu speichern und/oder zu bearbeiten.

3. Analysemodul (110) nach Anspruch 1 oder 2, **dadurch gekennzeichnet, dass** dieses zwei Microcontroller (112, 118) umfasst, wobei
- der erster Microcontroller (112) ausgebildet ist, einen ersten Datenumfang und/oder Datenteil zu bearbeiten, insbesondere die Moduldaten (112) des Analysemoduls (110) zu bearbeiten und
- der zweiter Microcontroller (118) ausgebildet ist, einen zweiten Datenumfang und/oder Datenteil zu bearbeiten, insbesondere die Moduldaten mindestens eines weiteren Slavemoduls 100 und/oder über einen Steckverbinder (122) kommunizierbare Daten zu bearbeiten.

4. Analysemodul (110) nach einem der vorherigen Ansprüche, **dadurch gekennzeichnet, dass** dieses als Kopfmodul ausgebildet ist und in UP-Richtung (120) nur einen IN-Anschluss (102) aufweist und mindestens drei OUT-Anschlüsse (202, 204, 206) aufweist.

5. Analysemodul (110) nach einem der Ansprüche 1 bis 3, **dadurch gekennzeichnet, dass** dieses als Endmodul ausgebildet ist und in UP-Richtung (120) mindestens drei IN-Anschlüsse (102, 104, 106) aufweist und keine OUT-Anschluss aufweist.

6. Analysemodul (110) nach einem der Ansprüche 1 bis 3, **dadurch gekennzeichnet, dass** dieses als Mittelmodul ausgebildet ist und in UP-Richtung (120) mindestens drei IN-Anschlüsse (102, 104, 106) aufweist und mindestens drei OUT-Anschlüsse (202, 204, 206) aufweist.

7. Analysemodul (110) nach einem der vorherigen Ansprüche, **dadurch gekennzeichnet, dass** dieses ausgebildet ist, Daten zu konvertieren, insbesondere zeit- und/oder eventabhängig zu konvertieren und/oder zu strukturieren.

8. MODULBUS-System (300) umfassend mind. zwei Slavemodule (100), wobei das MODULBUS-System eine Daisy-Chain-Systematik aufweist, wobei das Analysemodul (110) und mindestens ein Slavemodul (100) in einer Daisy-Chain in Reihe geschaltet sind, wobei zur Kommunikation in UP-Richtung (120) jedes Slavemodul (100) mindestens drei parallele IN-Anschlüsse (102, 104, 106) und/oder drei parallele OUT-Anschlüsse (202, 204, 206) aufweist, und wobei jedes Slavemodul (100) ausgebildet ist, in DN-Richtung (210) über einen OUT-Anschluss (208) Moduldaten zu senden, wobei mindestens ein Slavemodul (100) ein Analysemodul (110) ist, das nach einem der vorherigen Ansprüche ausgebildet ist.

9. Verfahren zum Betrieb und Überwachung eines MODULBUS-Systems (300) mit mindestens einem Gateway (150) und zwei Slavemodulen (100) wobei das MODULBUS-System eine Daisy-Chain-Systematik aufweist, wobei das Analysemodul (110) und mindestens ein Slavemodul (100) in einer Daisy-Chain in Reihe geschaltet sind, wobei ein Slavemodul (100) über mindestens drei parallele Anschlüsse (102, 104, 106; 202, 204, 206) in UP-Richtung (120) und mindestens einen Anschluss (208) in DN-Richtung verfügt, umfassend die Schritte:
- UP-Datenversand zwischen zwei Slavemodulen (100) über jeweils mindestens einen der parallelen IN-Anschlüsse (102, 104, 106) und OUT-Anschlüsse (202, 204, 206) in UP-Richtung und
- DN-Datenversand von allen Slavemodulen (100) in DN-Richtung über den einen OUT-Anschluss (208) an das Gateway (150),
wobei als ein Slavemodul (100) ein Analysemodul (110) verwendet wird, welches nach einem der Ansprüche 1 bis 7 ausgebildet ist.

10. Verfahren nach Anspruch 9, **dadurch gekennzeichnet, dass**
in einem Initialschritt durch die vom Gateway (150) an mindestens ein Slavemodule (100) gesendeten Daten, dieses identifiziert wird, insbesondere alle (Slavemodule (100) derart identifiziert werden,
- in einem ersten Analyseschritt in UP-Richtung (120) die von einem Gateway (150) an mindestens ein anderes Slavemodule (100) gesendete Daten mindestens teilweise kopiert und/oder speichern werden,
- in einem zweiten Analyseschritt in DN-Richtung (210) Moduldaten von mindestens einem Slavemodul (100) erfasst und kopiert und/oder speichern werden und/oder
- in einem Berichtsschritt gespeicherte Daten mindestens teilweise an das Gateway (150) gesendet werden.

## Claims

1. Analysis module (110) for a MODULE BUS system (300), wherein the MODULE BUS system has daisy chain systematics, wherein the analysis module (110) and at least one slave module (100) are connected in series in a daisy chain, wherein the analysis module (110) has at least three IN connections (102, 104, 106) and/or three OUT connections (202, 204, 206) for communication in the UP direction (120), and wherein the analysis module (110) is designed to send module data in the DN direction (210) via an OUT connection (208), comprising at least one microcontroller (112) and at least one memory element (114), wherein the analysis module (110) is designed
- in the UP direction to store the data sent from a gateway (150) to at least one other slave module (100) and/or
- in the DN direction (210) to receive module data from at least one slave module (100) via an IN connection (108) and to store at least some of this module data.

2. Analysis module (110) according to Claim 1, **characterized in that** said module is designed
- in the UP direction to store the data sent from the gateway (150) to all subsequent connected slave modules (100) and/or
- in the DN direction (210) to receive module data from all slave modules (100) via an IN connection (108) and to store and/or process this module data.

3. Analysis module (110) according to Claim 1 or 2, **characterized in that** said module comprises two microcontrollers (112, 118), wherein
- the first microcontroller (112) is designed to process a first data volume and/or data portion, in particular to process the module data (112) of the analysis module (110) and
- the second microcontroller (118) is designed to process a second data volume and/or data portion, in particular to process the module data of at least one additional slave module (100) and/or data that can be communicated via a plug connector (122).

4. Analysis module (110) according to any one of the preceding claims, **characterized in that** said module is designed as a front module and has only one IN connection (102) and at least three OUT connections (202, 204, 206) in the UP direction (120).

5. Analysis module (110) according to any one of Claims 1 to 3, **characterized in that** said module is designed as an end module and has at least three IN connections (102, 104, 106) and no OUT connection in the UP direction (120).

6. Analysis module (110) according to any one of Claims 1 to 3, **characterized in that** said module is designed as a central module and has at least three IN connections (102, 104, 106) and at least three OUT connections (202, 204, 206) in the UP direction (120).

7. Analysis module (110) according to any one of the preceding claims, **characterized in that** said module is designed to convert data, in particular to convert and/or to structure data in a manner depending on time and/or event.

8. MODULE BUS system (300) comprising at least two slave modules (100), wherein the MODULE BUS system has daisy chain systematics, wherein the analysis module (110) and at least one slave module (100) are connected in series in a daisy chain, wherein each slave module (100) has at least three parallel IN connections (102, 104, 106) and/or three parallel OUT connections (202, 204, 206) for communication in the UP direction (120), and wherein each slave module (100) is designed to send module data in the DN direction (210) via an OUT connection (208), wherein at least one slave module (100) is an analysis module (110) designed according to any one of the preceding claims.

9. Method for operating and monitoring a MODULE BUS system (300) having at least one gateway (150) and two slave modules (100), wherein the MODULE BUS system has daisy chain systematics, wherein the analysis module (110) and at least one slave module (100) are connected in series in a daisy chain, wherein a slave module (100) has at least three parallel connections (102, 104, 106; 202, 204, 206) in the UP direction (120) and at least one connection (208) in the DN direction, said method comprising the following steps:
- UP data transmission between two slave modules (100) via in each case at least one of the parallel IN connections (102, 104, 106) and OUT connections (202, 204, 206) in the UP direction and
- DN data transmission from all slave modules (100) in the DN direction via one OUT connection (208) to the gateway (150),
wherein an analysis module (110) designed according to any one of Claims 1 to 7 is used as a slave module (100).

10. Method according to Claim 9, **characterized in that**, in an initial step, the data sent from the gateway (150) to at least one slave module (100) is used to identify said slave module, in particular all slave modules (100), in such a way that
- in a first analysis step, at least some of the data sent by a gateway (150) to at least one other slave module (100) is copied and/or stored in the UP direction (120),
- in a second analysis step, module data from at least one slave module (100) is acquired and copied and/or stored in the DN direction (210) and/or
- in a report step, at least some of the stored data is sent to the gateway (150).

## Revendications

1. Module d'analyse (110) pour un système de bus MODULBUS (300), le système de bus MODULBUS présentant une systématique en daisy-chain, le module d'analyse (110) et au moins un module esclave (100) étant connectés en série en une daisy-chain, le module d'analyse (110) comportant au moins trois ports IN (102, 104, 106) et/ou trois ports OUT (202, 204, 206) pour la communication dans le sens UP (120), et le module d'analyse (110) étant conçu pour envoyer des données de module dans le sens DN (210) via un port OUT (208), comprenant au moins un microcontrôleur (112) et au moins un élément de mémoire (114), le module d'analyse (110) étant conçu pour
- stocker dans le sens UP les données envoyées par une passerelle (150) à au moins un autre module esclave (100) et/ou
- recevoir dans le sens DN (210), via un port IN (108), des données de module d'au moins un module esclave (100) et stocker ces données de module au moins partiellement.

2. Module d'analyse (110) selon la revendication 1, **caractérisé en ce que** celui-ci est conçu pour
- stocker dans le sens UP les données envoyées par la passerelle (150) à tous les modules esclaves (100) connectés suivants et/ou
- recevoir dans le sens DN (210), via un port IN (108), les données de module de tous les modules esclaves (100) et stocker et/ou traiter ces données de module.

3. Module d'analyse (110) selon la revendication 1 ou 2, **caractérisé en ce que** celui-ci comprend deux microcontrôleurs (112, 118), dans lequel
- le premier microcontrôleur (112) est conçu pour traiter une première étendue de données et/ou une partie de données, en particulier pour traiter les données de module (112) du module d'analyse (110) et
- le second microcontrôleur (118) est conçu pour traiter une seconde étendue de données et/ou une partie de données, en particulier pour traiter les données de module d'au moins un autre module esclave 100 et/ou des données pouvant être communiquées via un connecteur (122).

4. Module d'analyse (110) selon l'une quelconque des revendications précédentes, **caractérisé en ce que** celui-ci est conçu comme module de tête et, dans le sens UP (120), comporte uniquement un port IN (102) et comporte au moins trois ports OUT (202, 204, 206).

5. Module d'analyse (110) selon l'une quelconque des revendications 1 à 3, **caractérisé en ce que** celui-ci est conçu comme module final et, dans le sens UP (120), comporte au moins trois ports IN (102, 104, 106) et ne comporte aucun port OUT.

6. Module d'analyse (110) selon l'une quelconque des revendications 1 à 3, **caractérisé en ce que** celui-ci est conçu comme module central et, dans le sens UP (120), comporte au moins trois ports IN (102, 104, 106) et comporte au moins trois ports OUT (202, 204, 206).

7. Module d'analyse (110) selon l'une quelconque des revendications précédentes, **caractérisé en ce que** celui-ci est conçu pour convertir des données, en particulier pour les convertir et/ou les structurer en fonction du temps et/ou d'événements.

8. Système de bus MODULBUS (300) comprenant au moins deux modules esclaves (100), le système de bus MODULBUS présentant une systématique en daisy-chain, le module d'analyse (110) et au moins un module esclave (100) étant connectés en série en une daisy-chain, chaque module esclave (100) comportant, pour la communication dans le sens UP (120), au moins trois ports IN (102, 104, 106) parallèles et/ou trois ports OUT (202, 204, 206) parallèles, et chaque module esclave (100) étant conçu pour envoyer des données de module dans le sens DN (210) via un port OUT (208), au moins un module esclave (100) étant un module d'analyse (110) conçu selon l'une quelconque des revendications précédentes.

9. Procédé d'exploitation et de surveillance d'un système de bus MODULBUS (300) comprenant au moins une passerelle (150) et deux modules esclaves (100), le système de bus MODULBUS présentant une systématique en daisy-chain, le module d'analyse (110) et au moins un module esclave (100) étant connectés en série en une daisy-chain, un module esclave (100) disposant d'au moins trois ports parallèles (102, 104, 106 ; 202, 204, 206) dans le sens UP (120) et d'au moins un port (208) dans le sens DN, comprenant les étapes suivantes :
- envoi de données UP entre deux modules esclaves (100) via respectivement au moins l'un des ports IN (102, 104, 106) et OUT (202, 204, 206) parallèles dans le sens UP, et
- envoi de données DN de tous les modules esclaves (100) dans le sens DN via le port OUT (208) vers la passerelle (150),
un module d'analyse (110) conçu selon l'une quelconque des revendications 1 à 7 étant utilisé en tant que module esclave (100).

10. Procédé selon la revendication 9, **caractérisé en ce que**,
lors d'une étape initiale, au moins un module esclave (100) est identifié par les données envoyées qui lui sont envoyées par la passerelle (150), en particulier tous les modules esclaves (100) sont ainsi identifiés,
- lors d'une première étape d'analyse dans le sens UP (120), les données envoyées par une passerelle (150) à au moins un autre module esclave (100) sont au moins partiellement copiées et/ou stockées,
- lors d'une seconde étape d'analyse dans le sens DN (210), des données de module d'au moins un module esclave (100) sont acquises et copiées et/ou stockées et/ou
- lors d'une étape de rapport, les données stockées sont envoyées au moins partiellement à la passerelle (150).
